# EUROPEAN PATENT APPLICATION

(11) **EP 1 061 472 A2**
(43) Date of publication of application: **20.12.2000**
(21) Application number: 00305027.5
(22) Date of filing: 14.06.2000
(51) Int. Cl.: G06K 15/10

(54) **Printing with detection of security data**

(30) Priority: 14.06.1999 JP 16737399
(71) Applicant: CANON KABUSHIKI KAISHA, Tokyo (JP)
(72) Inventor: Taneya, Yoichi, c/o Canon Kabushiki Kaisha, Ohta-ku, Tokyo (JP); Ishinaga, Hiroyuki, c/o Canon Kabushiki Kaisha, Ohta-ku, Tokyo (JP); Matsumoto, Nobuyuki, c/o Canon Kabushiki Kaisha, Ohta-ku, Tokyo (JP); Saito, Ichiro, c/o Canon Kabushiki Kaisha, Ohta-ku, Tokyo (JP); Imanaka, Yoshiyuki, c/o Canon Kabushiki Kaisha, Ohta-ku, Tokyo (JP); Mochizuki, Muga, c/o Canon Kabushiki Kaisha, Ohta-ku, Tokyo (JP)
(74) Representative: Beresford, Keith Denis Lewis

(57) **Abstract**

A printing head, which is used for a printing apparatus for printing out the printing data externally inputted from a data processing apparatus to a recording medium, comprises printing execution means for printing out the externally inputted printing data to a recording medium; data detection means for detecting security data form the externally inputted printing data; and operation control means for controlling the printout operation of the printing execution means in a given condition when the data detection means detects security data. With the printing head thus structured, no printout is possible even when the image data is transmitted from the data processing apparatus to the printing apparatus if security data is detected from the transmitting data for printing.

## Description

### BACKGROUND OF THE INVENTION

### Field of the Invention

The present invention relates to a printing head that receives the printing data inputted externally from a data processing apparatus, and print them out on a recording medium. The invention also relates to a printing apparatus, a printing system, and a data processing apparatus that outputs printing data externally to the printing apparatus, as well as to a data processing method. The invention is applicable to an apparatus, such as a printer that records on paper, thread, fiber, cloth, leather, metal, plastics, glass, wood, ceramics, or the like, a copying machine, a facsimile equipment with communication systems, a word processor with a printing unit, or the like. Further, the invention is applicable to a recording system for industrial use which is arranged by combining various processing devices complexly. Here, the term "recording" referred to in the description herein is not only means the provision of meaningful images, such as characters and graphics, but also, it means the provision of meaningless images, such as patterns, for a recording medium.

### Related Background Art

At present, various printing systems are utilized for printing various images. A printing system of the kind is structured by connecting with it a data processing apparatus, such as a personal computer, and a printing apparatus, such as an ink jet printer. The data processing apparatus processes and produces the printing data which are externally output to the printing apparatus for printing them out on a recording medium, such a printing sheet. For example, among application programs installed on a personal computer, there is the one which contains samples and some other image data. Such image data can be output as prints when the image data are transmitted from the data processing apparatus to a printer as printing data.

Also, various image data are uploaded on a home page existing on the internet. Then, the image data of the kind can also be down loaded to a data processing apparatus, and can be output as prints when transmitted to a printing apparatus as the printing data. With the printing system described above, a printing apparatus prints out the printing data which the data processing apparatus outputs externally.

However, some of the image data contained in the aforesaid application programs or the image data existing on the internet are copyrighted, and there are some cases where printing out such images is not admitted. In this case, the image data are provided with a watermark or a signature as copyright identification or information, but the image data that carries copyright identification or information may be still printed out if the copyright is neglected. Particularly, the watermark that indicates the existence of a copyright is removed from the image data by use of a device which is arranged for such purpose. If such device is installed on the communication passage between a data processing apparatus and a printer, it becomes possible to remove the watermark from the image data and print them out eventually.

Also, for the printing system described earlier, a data processing apparatus and a printer is connected by use of LAN (Local Area Network) or the like, for example. In this case, it is highly possible for the printing data to leak outside when transmitted from a data processing apparatus to a printer. As a result, even when an authorized user produces the printout of the printing data protected by its copyright after having taken the formal procedures to obtain the admission form the copyright holder, it is still possible for a third party to obtain such printing data and print them out illegally.

### SUMMARY OF THE INVENTION

It is an object of the present invention to provide a printing head that can prevent the printout of the printing data which is not admitted for printing.

It is another object of the invention to provide a printing head for use in a printing apparatus for printing out printing data externally inputted from a data processing apparatus to a recording medium, which comprises printing execution means for printing out the externally inputted printing data to a recording medium; data detection means for detecting security data from the externally inputted printing data; and operation control means for controlling the printout operation of the printing execution means in a given condition when the data detection means detects security data, as well as to provide a printing apparatus and printing system provided with such a printing head.

In embodiments of the present invention, the printing data is externally inputted from a data processing apparatus to a printing apparatus. Then, the externally inputted printing data is printed out by printing execution means to a recording medium. However, data detection means detects security data from the externally inputted printing data, and if security data is detected, operation control means controls the printout operation of the printing execution means in a given condition. For example, the printing-out prohibition may be set as an operational control to be made by the operation control means corresponding to the security data, and then, if the corresponding security data is inserted into the image data which cannot be admitted for print due to the existence of copyright, no printout is possible even when the image data is transmitted from the data processing apparatus to the printing apparatus as the printing data.

Further, the present invention may include a mode in which the data detection means detects security data from the externally inputted printing data, but the set content of the security data thus detected is discriminated by data discrimination means, and then, depending on the set content thus discriminated, the operation control means controls the printout operation of the printing execution means in a given condition.

In accordance with the present invention, the operation control means makes it possible to prohibit the printout of the printing execution means as the operational control in a given condition corresponding to security data. In this case, since the operation control means prohibits the printout operation of the printing execution means in a given condition, it becomes impossible to print out the image data which cannot be admitted for print from the viewpoint of copyright, for example.

In accordance with the present invention, data memory means may be provided for storing predetermined printing data. Then, the operation control means enables the printing execution means to print out the printing data stored on the data memory means, while disabling the printing execution means to print out the externally inputted printing data as the operation control in a given condition corresponding to security data. In this case, the data memory means stores predetermined printing data. Then, the operation control means does not allow the printing execution means to print out the externally inputted printing data as the operational control in a given condition, but enables it to print out the printing data stored on the data memory means. For example, if the printing data of a guidance text reading such as "printing data is not admitted for print" is stored on the data memory means, this guidance text can be printed out.

For the present invention, releasing detection means may be provided to detect releasing data from the externally inputted printing data, and the operation control means does not control the operation of the printing execution means when the releasing detection means detects releasing data. In this case, the releasing data is detected by the releasing detection means from the externally inputted printing data. Then, if the releasing data is detected by the releasing detection means, the operation control means does not control the operation of the printing execution means. For example, even when the printout of a certain printing data is prohibited by the set up of security data, the printout of such printing data becomes possible by means of the releasing data if the releasing data can be obtained together with the printing data through the regular procedures.

In accordance with the present invention, the printing execution means may be an integrated circuit having at least a part thereof formed on the circuit base plate, and the operation control means is the integrated circuit formed on the circuit base plate. In this case, at least a part of the integrated circuit of the printing execution means, and the integrated circuit of the operation control means are formed on one single circuit base plate. With the integrated circuits of the printing execution means and the operation control means formed on one single circuit base plate, the communication paths of various data are formed by a printed-circuit board having these integrated circuits thereon, but not by connectors. Therefore, when the operation control means detects security data and control the operation of the printing execution means, it is difficult to detect from outside various data to be communicated between the operation control means and the printing execution means. Then, it is equally difficult to analyze the inner processing operation of the operation control means.

For the present invention, data deciphering means may be provided for deciphering by use of predetermined deciphering data the externally inputted printing data enciphered by predetermined cipher data, and the data detection means detects security data from the printing data deciphered by the data deciphering means, and the printing execution means prints out the printing data deciphered by the data deciphering means. In this case, when the externally inputted printing data is enciphered by use of predetermined cipher data, data deciphering means deciphers the printing data by use of predetermined deciphering data. The data detection means detects security data from the deciphered printing data, and the printing execution means prints out the deciphered printing data. As a result, the printing data that includes security data is transmitted from the data processing apparatus to the printing apparatus in the enciphered form, hence making it difficult to analyze the security data even if the transmitting data for printing should leak outside.

It is still another object of the invention to provide a printing head used for a printing apparatus for printing out the printing data externally inputted from a data processing apparatus to a recording medium, which comprises data deciphering means for deciphering by use of predetermined deciphering data the printing data externally inputted and enciphered by use of predetermined cipher data; and printing execution means for printing out the printing data deciphered by the data deciphering means to a recording medium, and as well as to provide a printing apparatus having the aforesaid printing head provided therefor.

In accordance with this aspect of the present invention, the printing data is externally inputted from the data processing apparatus to the printing apparatus, and the externally inputted printing data is enciphered by use of predetermined cipher data. Then, the printing data thus enciphered is deciphered by data enciphering means by use of predetermined deciphering data. The printing data thus deciphered is output by printing execution means to a printing medium. Here, since the printing data is transmitted from the data processing apparatus to the printing apparatus in the enciphered form, it is difficult to analyze the content of the printing data even if the transmitting data for print should leak outside.

For the present invention, it may be possible to make the cipher data and the deciphered data different. In this case, the deciphered data that exists on the printing apparatus differs from the cipher data that exists on the data processing apparatus. Therefore, even if the cipher data existing on the data processing apparatus should be allowed to be read out, this data cannot be utilized for the deciphered data on the printing apparatus.

In accordance with the present invention, data deciphering means may be provided for deciphering by use of predetermined deciphering data the externally inputted printing data enciphered by predetermined cipher data, and the data detection means detects security data from the printing data deciphered by the data deciphering means, and the printing execution means prints out the printing data deciphered by the data deciphering means.

For the present invention, it may be possible to provide cipher output means for externally outputting the cipher data to the data processing apparatus. In this case, since the cipher output means of the printing apparatus outputs the cipher data externally to the data processing apparatus, the data processing apparatus enciphers the printing data by use of the cipher data externally inputted from the printing apparatus.

For the present invention, deciphering memory means may be provided for storing the deciphered data externally inputted. Then, the data deciphering means may be able to decipher the printing data by use of the deciphering data thus stored on the deciphering memory means. In this case, the deciphering data externally inputted is stored on the deciphering memory means. As a result, the printing data is deciphered by the data deciphering means by use of the deciphering data stored on the deciphering memory means.

In accordance with the present invention, the printing execution means may be an integrated circuit having at least a part thereof formed on the circuit base plate, and the data deciphering means is the integrated circuit which may be formed on the circuit base plate. In this case, at least a part of the integrated circuit of the printing execution means, and the integrated circuit of the data deciphering means are formed on one single circuit base plate. With the integrated circuits of the printing execution means and the data deciphering means formed on one single circuit base plate, the communication paths of various data are formed by a printed-circuit board having these integrated circuits thereon, but not by connectors or the like. Therefore, when the data deciphering means transmits the enciphered printing data to the printing execution means after having deciphered such data, it becomes difficult to detect from outside various data to be communicated between the data deciphering means and the printing execution means. Then, it becomes equally difficult to analyze the inner processing operation of the data deciphering means from outside.

For the present invention described above, the printer main body to which the printing data is externally inputted from the data processing apparatus, and the printing head from which the printing data is printed out to the recording medium may be provided as units independent from each other, and the printing head may be provided with various means. In this case, the various means are positioned on the printing head to make it difficult to analyze the inner processing operation thereof. Therefore, it becomes equally difficult to analyze from outside the various processes related to the security data or the like executed by various means.

For the present invention described above, the printer main body to which the printing data is externally inputted from the data processing apparatus, and the printing head which prints out the printing data to the recording medium may be provided as units independent from each other, and the aforesaid circuit base plate may be incorporated in the printing head. In this case, as the circuit base plate is incorporated in the printing head which makes it difficult to analyze the inner processing operation thereof from outside, the data processes to be executed on the circuit base plate are made difficult to be analyzed from outside accordingly.

For the present invention described above, the printer main body to which the printing data is externally inputted from the data processing apparatus, and the printing head which prints out the printing data to the recording medium may be provided as the units independent from each other, and the printer main body may be provided with various means. In this case, the printer main body of the printing apparatus deciphers the enciphered printing data.

The printing system of the present invention comprises a data processing apparatus and a printing apparatus of the present invention, and the printing apparatus prints out the printing data which is produced and output externally by the data processing apparatus.

The data processing apparatus of the present invention produces and transmits the printing data the printing apparatus of the present invention, and may comprise, cipher memory means for storing the cipher data externally inputted for the printing apparatus; and data enciphering means for enciphering the printing data externally output to the printing apparatus using the cipher data stored on the cipher memory mean. For the data processing apparatus, the cipher memory means stores the cipher data which is externally inputted from the printing apparatus, and the data deciphering means deciphers by use of the cipher data thus stored on the cipher memory means. Therefore, the printing data thus enciphered is transmitted to the printing apparatus of the present invention.

### BRIEF DESCRIPTION OF THE DRAWINGS

Fig. 1 is a view which schematically shows the logical structure of a printing system in accordance with one embodiment of the present invention.
Fig. 2 is a block diagram which shows the physical structure of the printing system.
Fig. 3 is a perspective view which shows the inner structure of an ink jet printer serving as a printing apparatus.
Fig. 4 is a broken perspective view which shows the principal part of an ink jet recording head in accordance with the embodiments of the present invention.
Fig. 5 is a block diagram which shows the circuit structure of an ink jet head serving as a printing head.
Fig. 6 is a flowchart which shows the first half of the data processing method for the printing head.
Fig. 7 is a flowchart which shows the latter half of the data processing method for the printing head.
Fig. 8 is a flowchart which shows the data processing method for a host computer serving as a data processing apparatus.
Fig. 9 is a view which schematically shows the contents of the changed printing data, which are enciphered and deciphered by means of the printing system.
Fig. 10 is a view which schematically shows the logical structure of a printing system in accordance with another embodiment of the present invention.

### DETAILED DESCRIPTION OF THE PREFERRED EMBODIMENTS

Hereinafter, with reference to the accompanying drawings, the description will be made of the embodiments in accordance with the present invention.

Various means referred to in the description of the invention hereof may be provided without any problem so as to implement each of the functions accordingly. For example, the invention adopts a computer provided with the hardware dedicated therefor, as well as appropriate functions made executable by programs, the functions implemented in the interior of a computer itself by the application of appropriate programs, and also, the combination of the computer and those functions, among some others. Here, the printing data referred to in the description of the invention hereof means various data, which, for example, admit of printing commands, text codes, bit map data, and the combination thereof, among some others. The security data may be those data to be inserted into printing data, which are made detectable. For example, this admits of a coded data of several bits arranged in a predetermined position of header data. Further, the printing head referred to in the description of the invention hereof means a portion of a printing apparatus that directly executes data printing on a recording medium, such as printing sheet, and it should be good enough if only the head is installed on a printing apparatus as one individual unit. For example, this admits of an ink jet head, a thermal head, a dot-impact head, a LED (Light Emitting Diode) head, among some others.

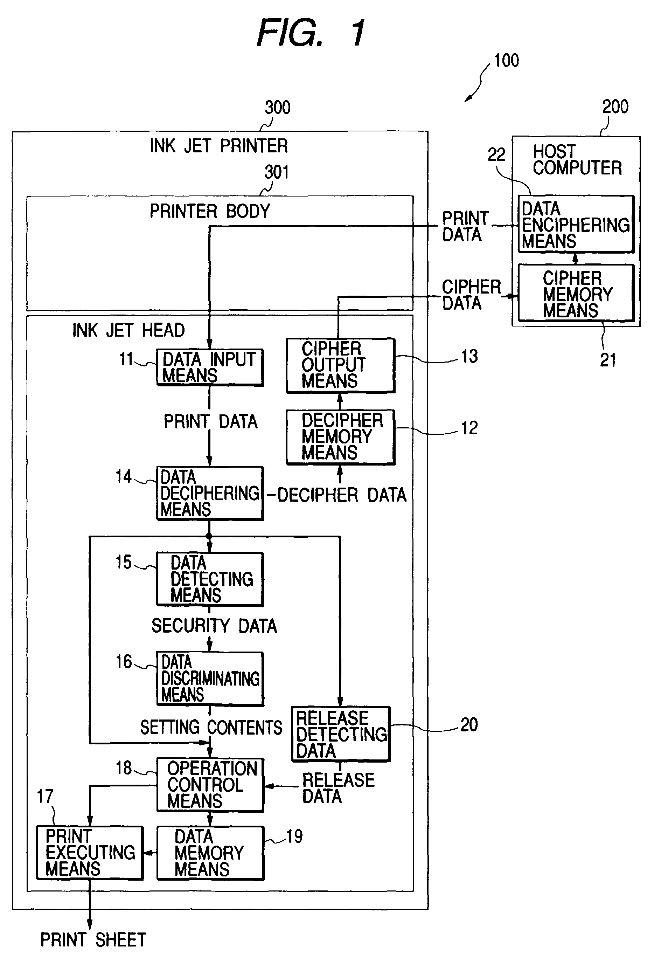

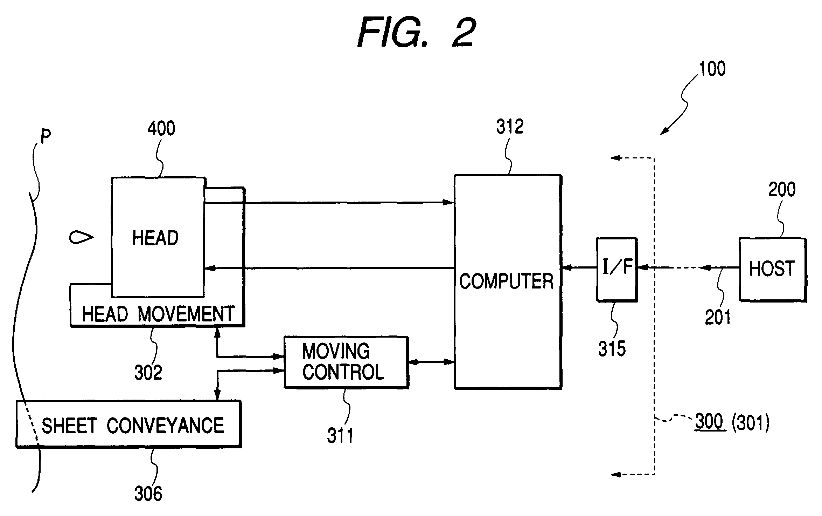

Fig. 1 is a view which schematically shows the logical structure of a printing system in accordance with the present embodiment. Fig. 2 is a block diagram which shows the physical structure of the printing system. The printing system 100 of the present embodiment is provided with the host computer 200 which is a data processing apparatus, and the ink jet printer 300 which is a printing apparatus as shown in Fig. 1 and Fig. 2. The ink jet printer 300 and the host computer 200 are connected by means of a communication cable 201.

The host computer 200 is formed by the so-called personal computer, which comprises the hardware (not shown), such as a CPU (Central Processing Unit), a ROM (Read Only Memory), a RAM (Random Access Memory), a HDD (Hard Disc Drive), a FDD (Floppy Disc Drive), a CD (Compact Disc) drive, an I/F (Interface).

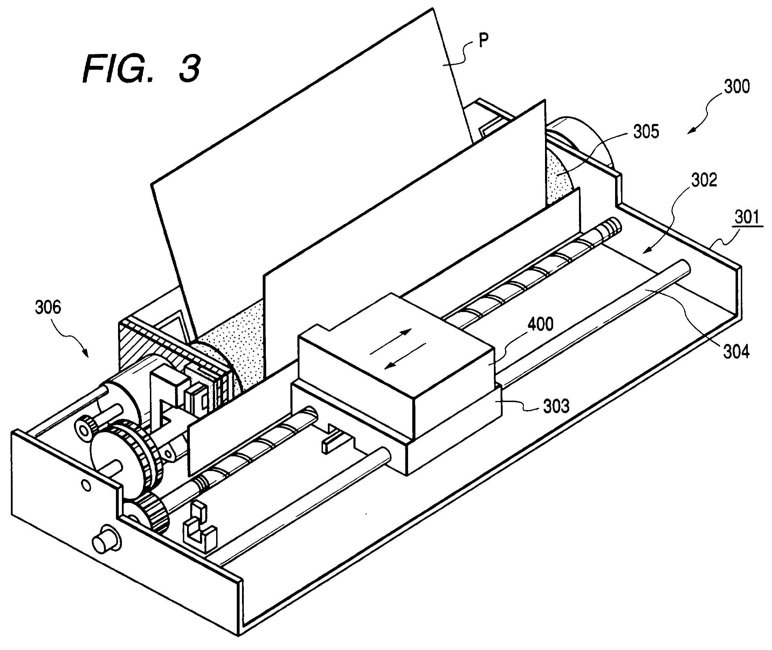

Fig. 3 is a perspective view which shows the inner structure of the ink jet printer serving as a printing apparatus. The ink jet printer 300 of the present embodiment is provided with a printer main body 301, and the ink jet head 400 which is a printing head as shown in Fig. 1 to Fig. 3. This ink jet 400 is installed on the main body 301 of the printer.

More precisely, the main body 301 of the printer is provided with a head traveling mechanism 302 as shown in Fig. 3. For the carriage 303 of this head traveling mechanism 302, the ink jet head 400 is detachably mounted with an ink tank which is integrally or detachably arranged in the forma of a cartridge. This carriage 303 is movably supported in the main scanning direction by a guide shaft 304 and others. Thus, the ink jet head 400 is also movably supported in the main scanning direction.

On the position that faces the ink jet head 400 thus supported, a platen roller 305 is arranged to hold and carry a printing sheet P. Then, a sheet carrying mechanism 306 is formed by the platen roller 305 and others in order to carry the printing sheet P in the sub-scanning direction one after another.

For the main body 301 of the printer, the head traveling mechanism 302 and the sheet carrying mechanism 306 are connected with a piece of the traveling control circuit 311 as shown in Fig. 2. This traveling control circuit 311 is connected with the main body computer 312. The main body computer 312 performs the overall control of the head traveling mechanism 302 and the sheet carrying mechanism 306. Then, relative traveling means is formed to enable the portion where the ink jet head 400 discharges ink droplets, and the surface of a printing sheet P to move relatively. With the main body computer 312, the communication I/F 315 and others are connected. Then, the host computer 200 is connected with this communication I/F 315 by means of the communication cable 201.

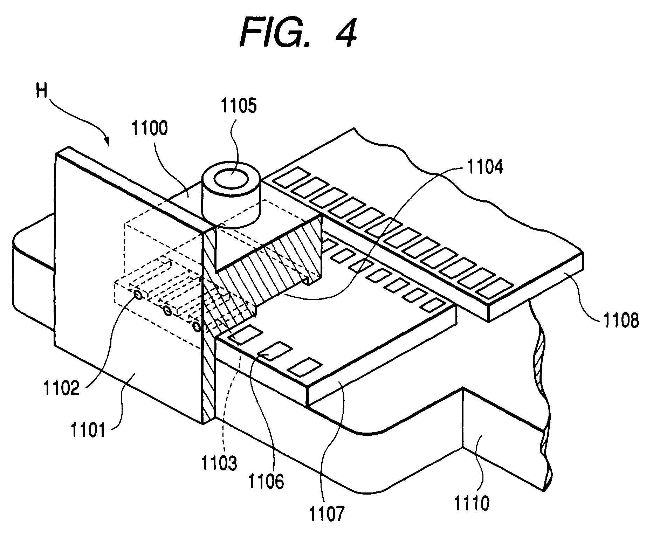

Fig. 4 is a broken perspective view which shows the principal part of an ink jet recording head in accordance with the embodiments of the present invention. The ceiling plate 1100 that constitutes an ink jet recording head H (400) is formed by resin material, which is integrally formed with a ceiling plate member that makes a liquid chamber 1104 for retaining recording liquid and a plurality of liquid flow paths 1103; a discharge port formation member 1101 which forms a plurality of discharge ports (orifices) 1102 communicated with a plurality of liquid flow paths 1103, respectively; and a recording liquid supply port 1105 altogether. Also, for the heater board (elemental base plate) 1107, there are formed by the application of known film formation technologies and techniques the heaters (electrothermal transducing elements) 1106 arranged in plural numbers on a silicon base plate, which create film boiling in ink by generating thermal energy to be utilized for discharging ink, and an electric wiring (not shown) formed by aluminum or the like that supplies electric power to the heaters. These members are positioned and fixed on a base plate 1110 by means of the known bonding techniques. The wiring base plate 1108 is provided with the wiring which is connected by use of the known wire bonding corresponding to the wiring on the heater board 1107, and a plurality of pads 1109 positioned on the edge portion of the wiring to receive electric signals from the main body of the apparatus. Then, the ceiling plate 1100 and the heater board 1107 are bonded in a state of being positioned corresponding to the liquid flow paths 1103 and the heaters 1106, respectively, and fixed on the base plate 1110 together with the wiring base plate 1108, hence forming the ink jet recording head H.

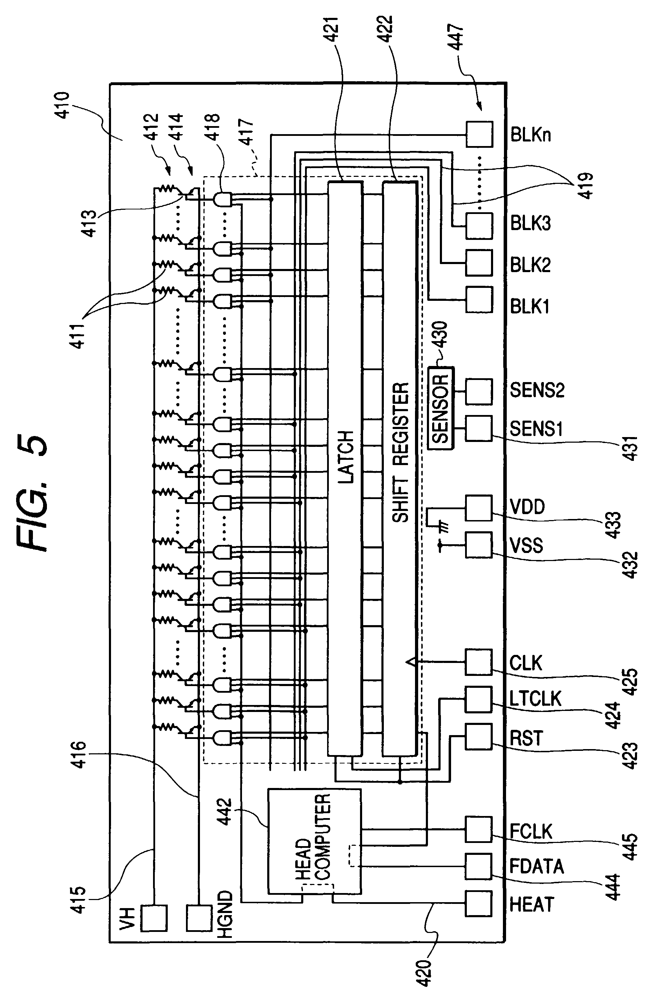

Fig. 5 is a block diagram which shows the circuit structure of the ink jet head serving as a printing head. As shown in Fig. 5, a substrate is provided with the elemental base plate 410 serving as a circuit base plate, and on the surface of the elemental base plate 410, various members are formed by use of a layer film or the like.

For the head substrate of the present embodiment, a plurality of heater elements 411 are formed on the front edge of the surface of the elemental base plate 410. Then, the heater unit 412 is formed by a number of heater elements 411 as recording elements. Each one end of many heater elements 411, each source electrode of many power transistors 413 is individually connected to form the driver circuit 414 using these power transistors 413.

The other end of each of the many heater elements 411 and each drain electrode of many power transistors 413 are connected with a pair of supply-source electrodes 415, and 416. Then, to the gate electrodes of the power transistors 413, a plurality of AND gates 418 of the printing control circuit 417 are connected, each individually. The heater elements 411 are formed by the layer film the material of which is tantalum nitride, tantalic aluminum, tantalic silicon nitride, or the like, the heater elements generate heat by means of driving electric power to be supplied from the supply-source electrodes 415 and 416 through the driver circuit 414.

The many AND gates 418 are divided into a plurality of control blocks and wired in matrix. Thus, a plurality of block electrodes 419 are connected with the many AND gates 418 per control block. Further, a piece of pulse electrodes 420 and a piece of latch circuit 421 are connected with a number of AND gates 418. Then, shift register 422 are connected in parallel with the latch circuit 421.

To the latch circuit 421 and shift register 422, a piece of reset electrodes 423 is commonly connected, and at the same time, each of its own clock electrodes 424 and 425 is individually connected with them, while a piece of data electrodes 444 is connected with the shift register 422.

To the block electrodes 419, signals are inputted to select a plurality of control blocks of many heater elements 411. To the pulse electrode 420, the heating pulses are inputted to control the heating of the heater elements 411. To the reset electrodes 423, resetting signals are inputted to reset the latch circuit 421 and shift register 422. Then, to the clock electrodes 424 and 425, the clock signals are inputted to determine the operational frequency with respect to the latch circuit 421 and shift register 422.

To the data electrodes 444, printing data are inputted serially. The serial printing data are converted by use of the shift register 422 into the parallel printing data. The parallel printing data are provisionally stored in the latch circuit 421, and supplied to the driver circuit 414 through the AND gates 418. In this manner, then, many heater elements 411 generate heat corresponding to the printing data.

Also, on the elemental base plate 410, a sensor unit 430 is formed with a temperature sensor and a heat-retaining sensor. To this sensor unit 430, a pair of sensor electrodes 431 are connected. Also, a pair of supply-source electrode 432 and 433 are formed, too. These supply-source electrodes 432 and 433 are connected with each of the units.

The sensor unit 430 performs the heat-retention and temperature measurement of the elemental base plate 410. To the sensor electrodes 431, the control signals are inputted to control the sensor unit 430. To the supply-source electrodes 432 and 433, driving power is supplied for use of each unit. With the driving power thus supplied, the printing control circuit 417 and others operate.

Then, the ink jet head 400 of the present embodiment is provided with the head computer 442 which is formed by a microcomputer. The head computer 442 is also formed on the elemental base plate 410 as an integrated circuit in the same manner as the printing control circuit 417 and the like.

The head computer 442 is inserted on the wiring that connects the printing control circuit 417 and the pulse electrodes 420, and also, inserted on the wiring that connects the printing control circuit 417 and the data electrodes 444. To the head computer 442, the clock electrodes 445 are also connected. Then, the clock signals that determine the frequency for operating the head computer 442 are inputted into the clock electrodes 445.

As described earlier, the printing data which are transferred to the printing control circuit 417 are inputted into the data electrodes 444, but the head computer 442 also executes the external input and external output of various data for which it communicates with the host computer 200 through the printer main body 301.

The printing control circuit 417 of the ink jet head 400 and the head computer 442 are connected with the main body computer 312 through a connector (not shown) which connects the printer main body 301 and the carriage 303 as shown in Fig. 2. Then, the main body computer 312 of the printer main body 301 is connected with the host computer 200.

In this respect, various kinds of electrodes 415 are a generic term of the wiring lines and connecting pads, and the pad unit 447, which serves as the data input unit formed by the connecting pads for a number of electrodes 415 ..., is arranged on the rear edge portion of the elemental base plate 410 opposite to the heater unit 412.

In other words, on the head substrate of the present embodiment, the heater unit 412 is arranged on the front edge portion of the surface of the elemental base plate 410 as shown in Fig. 2, and in back thereof, the driver unit 414, the printing control circuit 417, and the head computer 442 are arranged in that order. Then, the pad unit 447 is arranged on the rear edge portion of the elemental base plate 410.

For the printing system 100 of the present embodiment, the ink jet head 400 of the ink jet printer 300 is provided with the head computer 442 besides the main body computer 312 of the printer main body 301 as described earlier. Then, various operational programs are preinstalled on the head computer 442.

Since this head computer 442 demonstrates various functions in accordance with the operational programs thus preinstalled, the ink jet head 400 can logically implement various functions by various means, such as data input means 11, decipher memory means 12, cipher output means 13, data decoded means 14, data detection means 15, data discrimination means 16, printing execution mean 17, operation control means 18, data memory means 19, releasing detection means 20, among some others as shown in Fig. 1.

Likewise, various operational programs are preinstalled on the host computer 200 to demonstrate various functions in accordance with the operational programs thus installed, thus implementing physically various function by use of various means, such as cipher memory means 21, data enciphering means 22, among some others.

The data input means 11 corresponds to the data electrodes 444 of the ink jet head 400, and then, externally input from the printer main body 301 the printing data that the host computer 200 transmits to the printer main body 301 of the ink jet printer 300.

The decipher memory means 12 corresponds to the predetermined memory area of the inner memory (not shown) of the head computer 442 of the ink jet head 400, and here, stores, as data, the deciphered data that dually serve as the cipher data. The cipher output means 13 corresponds to the predetermined function of the head computer 442 corresponding to the predetermined operational program, and externally outputs cipher data from the printer main body 301 to the host computer 200.

The cipher memory means 21 corresponds to the predetermined storage area or the like of the RAM of the host computer 200, and stores, as data, the cipher data externally inputted from the ink jet printer 300. The data enciphering means 22 corresponds to the predetermined function of the host computer 200 corresponding to the predetermined operational program, and enciphers the printing data externally output to the ink jet printer 300 by use of the cipher data stored as data on the cipher memory means 21.

More precisely, the host computer 200 transmits at first the starting command as a part of the printing data when executing the printing data. Therefore, the head computer 442 of the ink jet head 400 returns a predetermined cipher data to the host computer 200 when the input of the starting command is detected.

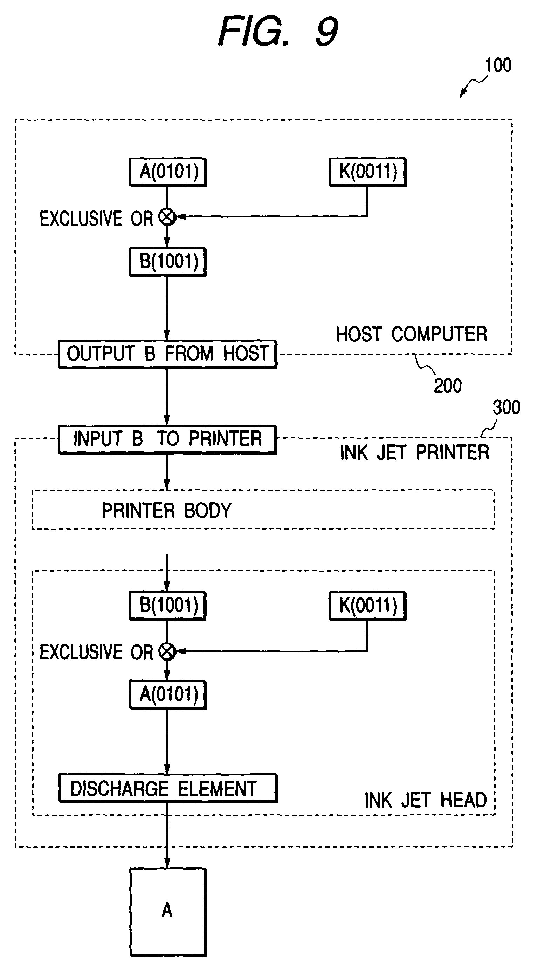

Since the cipher data are utilized for enciphering the text data or the like which should be printed for output actually in accordance with the printing data. Therefore, as shown in Fig. 9, the cipher data are formed by a predetermined bit stream, for example. The host computer 200 provisionally stores on a RAM or the like the cipher data thus returned for the corresponding transmission of the starting command, and enciphers the printing data to be transmitted to the ink jet printer 300 per character by executing the exclusive OR with the cipher data.

Each of the following means 14 to 16 and 18 corresponds to the predetermined function of the head computer 442 corresponding to the predetermined operational program, and the data deciphering means 14 deciphers the externally inputted printing data on the data input means 11 by means of the decipher data stored the decipher memory means 12 as data.

The data detection means 15 detects the security data out of the printing data which have been externally inputted into the data input means 11 and deciphered by the data deciphering means 14. The data discrimination means 16 discriminates the setting contents of the security data thus detected by the data detection means 15.

In this respect, the data input means 11 may be externally inputted the printing data which have not been enciphered in some cases. In such a case, therefore, the data deciphering means 14 outputs the inputted printing data without processing. Thus, the data detection means 15 detects the security data from the printing data which have not been enciphered or deciphered.

The security data are just like the security code utilized for DAT (Digital Audio Tape), for example, and here, inserted in the form of predetermined bits on the predetermined position of the header of a printing data. The security data is set at one of plural contents, such as "printing admitted", "printing prohibited", "printing warned", and the like. The head computer 442 discriminate one content of the security data from the others.

The printing execution means 17 corresponds to the portions of the heater unit 412, the driving circuit 414, the printing control circuit 417, and the like, and prints out directly on a printing sheet P the printing data which have been externally inputted into the data input means 11. The operation control means 18, however, controls the printout operation of the printing execution means 17 in a given condition corresponding to the set contents of the security data discriminated by the data discrimination means 16.

More precisely, if the set content of the security data is the "printing admitted", the heat computer 442 outputs the printing data which have been inputted from the data electrodes 444 to the printing control circuit 417, and at the same time, transfers the heat pulses which have been inputted from the pulse electrodes 420 to the printing control circuit 417, thus admitting the printouts of the printing data.

If the set content of the security data is the "printing prohibited", the printing data which have been inputted from the data electrodes 444 are not output to the printing control circuit 417. The heat pulses which have been inputted from the pulse electrodes 420 are not transferred to the printing control circuit 417, either, thus prohibiting the printouts of the printing data.

Also, the data memory means 19 corresponds to the predetermined storage area of the inner memory of the head computer 442. Here, a warning guidance given to the printing data, such as "printing is not admitted for the printing data", is stored as data in advance.

Now, therefore, if the set content of the security data is the "printing warned", the head computer 442 does not output the printing data which have been inputted from the data electrodes 444 to the printing control circuit 417, but outputs the printing data on the inner memory to the printing control circuit 417, and transfers the heat pulses which have been inputted from the pulse electrodes 420 to the printing control circuit 417, thus printing out the warning guidance of the printing data, while prohibiting the printouts of the printing data that have been inputted from outside.

The releasing detection means 20 corresponds to the predetermined storage area of the inner memory of the head computer 442, and detects the releasing data from the printing data which have been externally inputted from the data input means 11. The releasing data is formed by a binary flag having the default value of "0", and designates the releasing of the operational control of the printing executing means 17 using the operational control means 18. Therefore, when the releasing detection means 20 detects the releasing data of the printing data, the operational control means 18 does not control the printing execution means 17 any longer.

In this respect, the data input means 11 may receive from outside the printing data having no security data in it in some case. In such a case, the printing data thus inputted are output without the operation of each of the various means 15 to 18. The printing execution means 17 performs printing out the printing data without any relations with security data.

With the structure of the printing system 100 of the present embodiment which are arranged as described above, the host computer 200 transmits the printing data to the ink jet printer 300, for example, and the ink jet printer 300 performs printing out the printing data to a printing sheet P.

However, if the printing data are not generated by the manual operation of the host computer 200, but those obtained by the host computer 200 using an application program or through the internet, such printing data may be provided with the security data having a specific content by a copyright holder.

In such a case, the printing system 100 of the present embodiment enables the host computer 200 to transmit such printing data to the ink jet printer 300 without any particular problem. However, the ink jet heat 400 of the ink jet printer 300 prohibits the printouts in accordance with the set content of the security data.

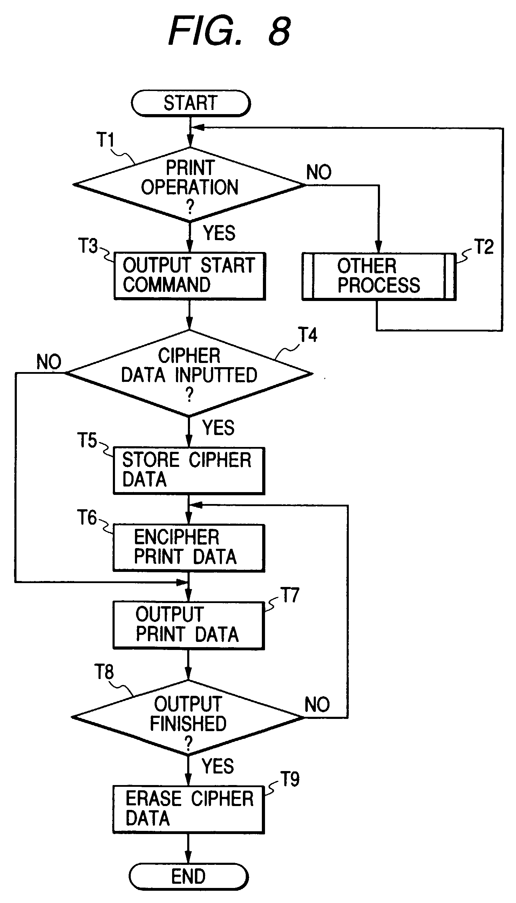

Fig. 8 is a flowchart that shows the data processing method of the host computer which serves as a data processing apparatus. As shown in Fig. 8, the host computer 200 executes various data processes (step T2), and may execute a printing operation as one of them (step T1). In this case, the host computer 200 transmits the starting common to the ink jet printer 300 as a part of the printing data (step T3). Then, the starting common which is externally inputted into the printer main body 301 is carried up to the ink jet head 400 of the ink jet printer 300.

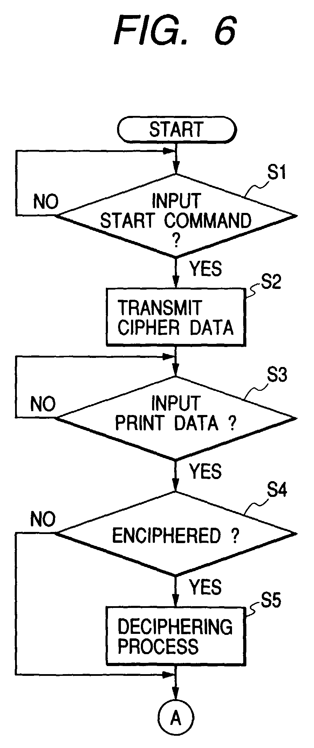

Fig. 6 is a flowchart which shows the first half of the data processing method of the printing head. The head computer 442 of the ink jet head 400 recognizes the initiation of printing (step S1) by the input of the starting command from outside through the printer main body 301 as shown in Fig. 6, and returns the cipher data to the host computer 200 (step S2).

When the starting command is transmitted and the cipher data is returned (step T4), the host computer 200 provisionally stores the cipher data on the RAM or the like (step T5). Then, the data are transmitted to the ink jet printer 300, while the printing data are being enciphered by use of the cipher data which are provisionally stored (steps T6 and T7).

Fig. 9 is a view which schematically shows the contents of the changed printing data which are enciphered and deciphered by the printing system. As shown in Fig. 9, since the cipher data formed by the predetermined bit stream corresponding to the printing data, the host computer 200 enciphers the printing data to be transmitted to the ink jet printer 300 per character by executing the exclusive OR with the cipher data. In this respect, the host computer 200 deletes the provisionally stored cipher data and returns to the initial status (step T9) when the printouts of the printing data are completed (step T8).

Now, as shown in Fig. 6, the printing data externally inputted from the host computer 200 are analyzed by the head computer 442 of the ink jet head 400 of the ink jet printer 300. Then, the presence or absence of the encipherment thereof is determined (step S4). As described above, the printing data are usually enciphered. Therefore, the printing data are deciphered using predetermined deciphering data (step S5).

In this case, as shown in Fig. 9, the deciphered data become the same bit stream as that of the cipher data. Thus, the head computer 442 of the ink jet head 400 deciphers the printing data which are being inputted from outside per character of the bit stream by executing the exclusive OR with the deciphered data.

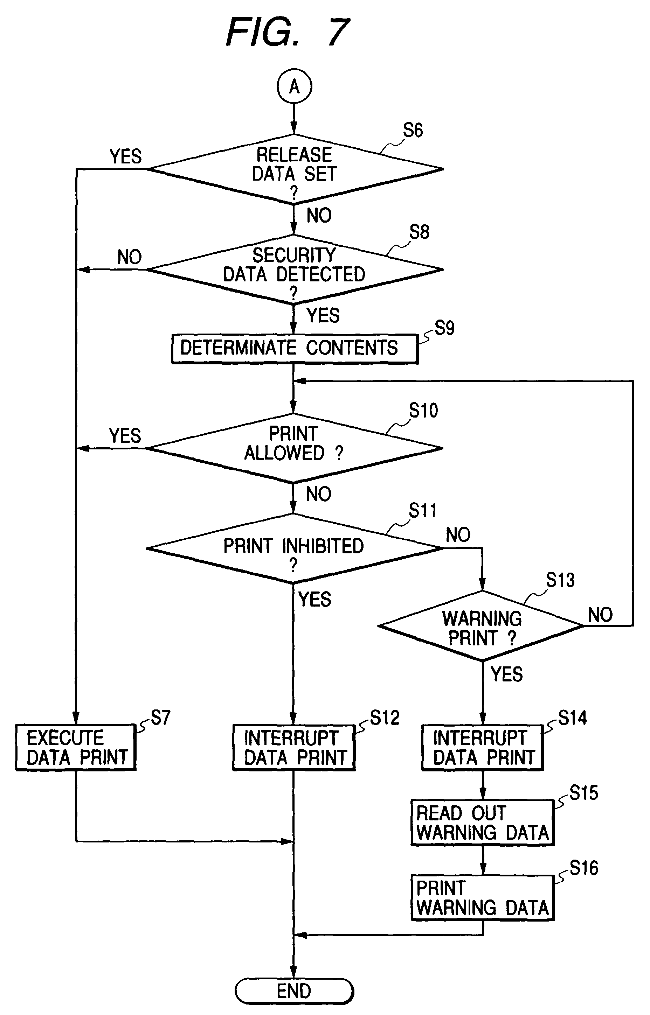

Fig. 7 is a flowchart which shows the latter half. As shown in Fig. 7, when the head computer 442 receives the printing data from outside, which are yet to be deciphered or when it receives the enciphered data as the printing data from outside, but cannot decipher them, the head computer executes the data searching on the header of the printing data to determine whether or not any releasing data has been set (step S6). Then, if the releasing data is detected, the head computer outputs the printing data inputted from the data electrodes 444 to the printing control circuit 417, and at the same time, transfers the heat pulses inputted from the pulse electrodes 420 to the printing control circuit 417, hence printing out the printing data as in the conventional art (step S7).

On the other hand, if no releasing data is detected, the head computer 442 executes data searching on the heater of the printing data to determine whether or not any security data has been set (step S8). Then, even if no security data is detected, the printing data are printed out as in the conventional art (step S9).

Also, if any security data is detected from the printing data, the head computer 442 controls the print out operation corresponding to the set content thereof as having been determined (step S9). In other words, if the security set content is the "printing admitted" (step S10), the printing data are printed out as in the conventional art (step S9).

However, it the security set content is the "printing prohibited" (step S11), the head computer 442 does not output the printing data inputted from the data electrodes 444 to the printing control circuit 417. The head computer does not transfer the heat pulses inputted from the pulse electrodes 420 to the printing control circuit 417, either, hence prohibiting the printout of the printing data (step S12).

Also, if the set content of the security data is the "printing warned" (step S13), the head computer 442 does not output the printing data inputted from the data electrodes 444 to the printing control circuit 417, thus prohibiting the printout of the printing data inputted from outside (step S14).

Further, the head computer 442 reads out the warning guidance of the printing data from the inner memory (step S15), and outputs this guidance to the printing control circuit 417, and at the same time, transfers the heat pulses inputted from the pulse electrodes 420 to the printing control circuit 417, hence printing out the warning guidance of the printing data (step S16).

The warning guidance notifies the user to the effect that the printing data is not admitted for printing. For example, the text data should read "the printing data is not admitted for printing" or the like. Here, it may be possible to designate the party to be communicated for the admission of that particular printing. In this respect, if it is intended to print out compulsorily the printing data which is not admitted for printing, the resultant data printed as a text or an image becomes hardly readable or observable.

In accordance with the present embodiment, if the security data is set for the printing data, the ink jet head 400 of the printing system 100 controls the printout of the printing data following a given condition corresponding to the set content of the security data, hence making it possible to prevent the illegal printout of the printing data which is protected by copyright.

For example, when a certain operator produces the image data or the like, inputs it into an application program, the internet, or the like, and sets a security data for such image data as desired, the ink jet printer 300 cannot print it out even when the host computer 200 obtains it from the application program or through the internet.

Particularly, the printing system 100 of the present embodiment performs the operational control of printouts by use of the ink jet head 400 of the ink jet printer 300 as described above. Therefore, it is difficult to detect and analyze the data processing of the security data from outside, hence making it possible to reliably prevent the illegal printout of the printing data which is protected by copyright.

In other words, the data passage of the printing system 100 of the present embodiment is continuously formed by a communication cable 201, the connector of the carriage 303, and the like from the host computer 200 to the ink jet head 400 of the ink jet printer 300. Therefore, it is easy to detect and analyze the communication data from outside.

However, the ink jet head 400 is formed by a single unit which cannot be dismantled, and the heater unit 412, the driver circuit 414, the printing control circuit 417, and some others that implement printing out actually, and the head computer 442 that controls the printout operation are integrally formed on one single elemental base plate 410. As a result, it is difficult to detect and analyze from outside the inner process of the head computer 442, and the communication data between the head computer 442 and the printing control circuit 417 or the like.

Furthermore, the ink jet head 400 is position at the last portion of the data transfer passage which continues from the host computer 200 to a printing sheet P. Then, the printing data is transferred electrically to the ink jet head 400, but it is output as ink droplets from the ink jet head 400. Therefore, it is also difficult to analyze the inner processing of the security data by comparing the input to and the output from the ink jet head 400.

Also, for the printing system 100 of the present embodiment, plural kinds of security data are regulated in advance, and the ink jet head 400 controls the printout operation of the printing data in a given condition corresponding to the set content of the security data. As a result, it is made possible to notify the user of the incapability of printing out due to the copyright protection.

Further, with the printing system 100 of the present embodiment, it is possible for the ink jet printer 300 to print out the image data as the printing data if a releasing data is attached thereto after communicating with the copyright holder thereof and distributed to the host computer 200, for example, even when the printout of the image data, which is up loaded on the internet, is prohibited by the security data as described above.

In this way, even when the printout of the printing data is prohibited by the presence of the security data, it is possible to print out such data if only the releasing data can be obtained therewith through regular procedures or the like which is required for the purpose. In this respect, there are the insertion of releasing data, the deletion of security data, and the arrangement of the "printing admitted" setting for the security data as a method for making such prohibited printout printable. Therefore, depending on the data structure, the mode of data distribution through communication, it is possible to select the most suitable one from among those methods mentioned above.

Further, although the continuous data passage from the host computer 200 to the ink jet head 400 of the ink jet printer 300 is easy to be accessed from outside for detection of communication data as described above, the printing system 100 of the present embodiment transfers the printing data through the communication passage in the enciphered form to keep its security reliably. Particularly, not only the portion that should be printed out actually, but the security data and releasing data are also enciphered likewise. As a result, it is made possible to keep security reliably for the security data itself and the releasing data as well.

Moreover, for the printing system 100 of the present embodiment, the ink jet head 400 sets cipher data on the host computer 200 immediately before its printing operation. As a result, it is unnecessary to keep the cipher data to reside always on the host computer 200 where various data can easily read out, hence keeping the security of the cipher data in good condition.

Further, since the enciphered data and the deciphered data are the same for the printing system 100 of the present embodiment, it is easier to carry out the data processing needed for enciphering and deciphering. As a result, the ink jet head 400 can reduce the data capacity set aside for the storage of the enciphered and deciphered data.

Also, the ink jet head 400 stores the enciphered and deciphered data on the inner memory of the head computer 442, hence making it possible to update the enciphered and deciphered data in order to improve the security thereof should there be any leakage thereof.

Here, however, the present invention is not necessarily limited to the embodiments described above. Any modification thereof may be made within the range of the purport of the invention. For example, although the ink jet head 400 of bubble jet type is exemplified as the printing head in the embodiments described above, it may be possible to utilize an ink jet head of piezo-element type, a thermal head, a dot-impact head, and an LED head, among some others.

Also, in accordance with the embodiments described above, it is exemplified to control the printout operation in one of plural conditions by discriminating one of the set contents of plural kinds of security data which have been regulated in advance. However, if the predetermined condition in which the printout should be controlled is only one, such as the "printing prohibited", it may be possible to confine the regulation of the security data to only such one, and then, to control the printout operation when the security data is detected from the printing data without determining the set content thereof.

Also, in accordance with the embodiments described above, the example is shown in which the printing data having the security data inserted into it is enciphered and transferred from the host computer 200 to the ink jet head 400 of the ink jet printer 300, and then, the ink jet head 400 deciphers the printing data to detect the security data.

However, without any relationship with a security data of the kind, the printing data may be enciphered and transferred from the host computer 200 to the ink jet head 400 of the ink jet printer 300. Then, the printing data can be deciphered by use of the ink jet head 400. Even in this case, the data deciphering is carried out by the ink jet head 400 the inner processing of which cannot easily analyzed. Therefore, it is made possible to improve the security of the printing data which is transferred as data.

Further, it has been described to make the enciphered data and the deciphered data the same in accordance with the above embodiments so that the enciphering and deciphering data processes are made easier. However, it is possible to make them different. In such a case, the ciphering data can be utilized for enciphering the printing data, but not for deciphering it. Therefore, it is arranged to output only the cipher data which cannot be utilized for deciphering outside the ink jet head 400.

In other words, the deciphering data resides only in the interior of the ink jet head 400 the inner processing of which can hardly be analyzed to make it possible to keep the security thereof in good condition, hence improving the security of the printing data which are enciphered and transmitted as data. In this respect, the exchange system, in which the enciphering and deciphering data are different, is generally utilized for the performance through the internet or the like.

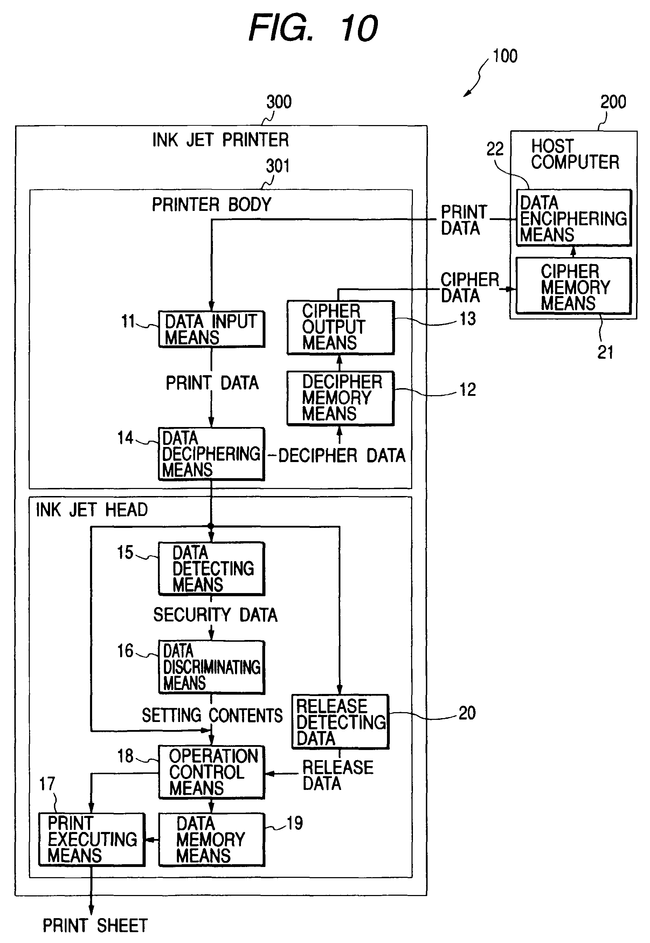

Fig. 10 is a view which schematically shows the logical structure of a printing system in accordance with another embodiment of the present invention. The present invention is different from the previous one in that data input means 11, data deciphering means 14, deciphering memory means 12, and cipher output means 13 are provided for the main body of a printer, and not for the printing head (ink jet head). Of the printer main body and the printing head, which are units independent from each other, the main body of the printer deciphers the enciphered printing data. In this manner, it becomes possible to decipher the printing data even when the printing heads are exchanged for a printing apparatus.

With the present invention structured as described above, it is possible to demonstrate the effects thereof as follows:

In accordance with the present invention, the printing data are inputted externally from the data processing apparatus. Then, the printing data thus inputted externally are printed out by printing execution means to a recording medium, and data detection means detects the security data from the printing data inputted from outside. Therefore, if any security data is detected, operation control means controls the printout operation of the printing execution means in a given condition. In this way, the printout is prohibited as the operation control of the operation control means, which is set as the corresponding security data, for example, and then, if the security data is inserted into the image data the printout of which is not admitted from the viewpoint of its copyright, the printout of such image is not output even when the image data is transmitted from the data processing apparatus as the printing data. Therefore, it becomes possible to prevent any illegal printout of the printing data whose printout is not admitted.

In accordance with the present invention, the set content of the security data, which is detected from the printing data, is discriminated by discrimination means, and then, the printout of the printing execution means is controlled by the operation control means in a given condition with respect to the set content thus detected. For example, therefore, if the security data of the "printing prohibited" is inserted into the image data whose printout is not admitted from the viewpoint of copyright, the printout of the image data is not made even if the image data is transmitted from the data processing apparatus. Therefore, it becomes possible to prevent any illegal printout of the printing data whose printout is not admitted. It is also possible to print out a warning guidance, not the printing data.

Also, in accordance with the present invention, the operation control means prohibits the printout of the printing execution means as the operation control in a given condition, making it possible to prevent the printout of the image data whose printout is not admitted from the viewpoint of copyright, for example.

Also, the predetermined printing data are stored by data memory means, and then, as the operation control in a given condition, the operation control means does not allow the printing execution means to print out any printing data which is externally inputted, but print out the printing data stored on the data memory means. Therefore, if the printing data of a guidance text reading "the printing data is not allowed to be printed" or the like is stored on the data memory means, for example, such guidance text may be printed out to notify the user of a specific piece of information.

Also, releasing detection means detects the releasing data for the printing data which is externally inputted, and if the releasing data is detected by the releasing detection means, the operation control means controls the operation of the printing execution means. Then, for example, even when the printout of a certain printing data is prohibited by the set up of the corresponding security data, it becomes possible to admit the printout of the prohibited printing data as desired if the releasing data is obtained together with the printing data through the regular procedures, because the releasing data thus obtained enables the printout to be made for such printing data.

Also, with at least a part of the integrated circuit of the printing execution means and the integrated circuit of the operation control means being formed on one circuit base plate, it becomes difficult to detect from outside various data communicated between the operation control means and the printing execution means when the operation control means controls the operation of the printing execution means by detecting the security data from the printing data, and then, it is equally difficult to analyze the inner processing operation of the operation control means. As a result, the security is improved for the various processes related to the securing data.

In accordance with the present invention, when the printing data is externally inputted from the data processing apparatus, the externally inputted printing data is enciphered by predetermined cipher data. Then, the printing data is deciphered by data deciphering means by use of predetermined deciphering data. When the printing execution means prints out to a recording medium the printing data thus deciphered, the printing data is transmitted from the data processing apparatus to the printing apparatus as the data which are in the enciphered condition. As a result, it becomes difficult to analyze the contents of the printing data in transmission even if the printing data should leak outside. Thus, the security of the printing data is made in good condition.

Also, in accordance with the present invention, the deciphered data existing in the printing apparatus is different from the cipher data existing in the data processing apparatus. Therefore, even if the cipher data in the data processing apparatus is read out, it is impossible to utilize such data for the deciphered data in the printing apparatus, hence improving the security of both deciphered data and the printing data.

Also, the cipher data output means of the printing apparatus outputs the cipher data externally to the data processing apparatus. Then, the data processing apparatus enciphers the printing data by means of the cipher data externally inputted from the printing apparatus. Thus, there is no need for keeping the cipher data always in the data processing apparatus, hence making it possible to improve the security of both the cipher data and the printing data. Also, the deciphering memory means stores the deciphered data which are externally inputted, and the data deciphering means deciphers the printing data by use of the cipher data stored on the deciphering memory means. For example, therefore, it is possible to restor the security of the cipher data which has leaked by updating such data.

Also, with at least a part of the integrated circuit of the printing execution means and the integral circuit of the data deciphering means are formed on a single circuit base plate to make it difficult to detect from outside the various data which require data communications. It is also difficult to analyze the inner process operation of the data ciphering means. Therefore, the security of various processes is improved with respect to the data deciphering.

Also, the printer main body and the printing head are units independent from each other. Then, it is more difficult to analyze the inner process operation of the printing head from outside. Now that various means are positioned on the printer head, various processes of the security data by use of the various means on the printing head can hardly be analyzed from outside, thus preventing the illegal printout and the like excellently.

Also, of the printer main body and the printing head, which are the units independent from each other, the printing head has the circuit base plate incorporated therein to make it difficult to analyze the inner processing operation from outside. Therefore, the data processing on the circuit base plate can hardly analyzed from outside, hence preventing the illegal printout and the like excellently.

Also, of the printer main body and the printing head, which are the units independent from each other, the printer main body deciphers the enciphered printing data, thus making it possible to decipher the printing data even when the printing heads are exchanged for the printing apparatus.

For the data processing apparatus of the present invention, the cipher memory means stores the cipher data externally inputted from the printing apparatus. then, the data enciphering means enciphers the printing data by use of the cipher data stored on the cipher memory means. The printing data thus enciphered is transmitted to the printing apparatus of the present invention as data to make it possible to encipher the printing data in a state of being deciphered by the printing apparatus. There is no need for keeping the cipher data on the data processing apparatus at all the time, hence making it possible to improve the security of the cipher data and the printing data as well.

## Claims

1. A printing head used for a printing apparatus for printing out the printing data externally inputted from a data processing apparatus to a recording medium, comprising:
printing execution means for printing out said externally inputted printing data to a recording medium;
data detection means for detecting security data form said externally inputted printing data; and
operation control means for controlling the printout operation of said printing execution means in a given condition when said data detection means detects security data.

2. A printing head according to Claim 1, further comprising data discrimination means for discriminating the set content of security data detected by said data detection means, wherein said operation control means controls the printout of said printing executing means in a given condition corresponding to the set content of security data discriminated by said data discrimination means.

3. A printing head according to Claim 1, wherein said operation control means prohibits the printout of said printing execution means as the operation control in a given condition corresponding to security data.

4. A printing head according to Claim 1, further comprising data memory means for storing predetermined printing data, wherein said operation control means enables said printing execution means to print out the printing data stored on said data memory means, while disabling said printing execution means to print out said externally inputted printing data as the operation control in a given condition corresponding to security data.

5. A printing head according to Claim 1, further comprising releasing data detection means for detecting releasing data from said externally inputted printing data, wherein said operation control means does not control the operation of said printing execution means when said releasing detection means detects releasing data.

6. A printing head according to Claim 1, wherein said printing execution means is the integrated circuit having at least a part thereof formed on the circuit base plate, and said operation control means is the integrated circuit formed on said circuit base plate.

7. A printing head according to Claim 1, further comprising data deciphering means for deciphering by use of predetermined deciphering data the externally inputted printing data enciphered by predetermined cipher data, wherein said data detection means detects security data from the printing data deciphered by said data deciphering means, and said printing execution means prints out the printing data deciphered by said data deciphering means.

8. A printing head according to Claim 1, wherein ink is discharged to a recording medium for printing out.

9. A printing head according to Claim 8, wherein ink is discharged by utilization of thermal energy.

10. A printing head according to Claim 8, wherein ink is discharged by use of piezo-elements.

11. A printing head according to Claim 1, wherein said printing head is a thermal head.

12. A printing apparatus for printing out the printing data externally inputted from a data processing apparatus to a recording medium, comprising:
a printing head provided with printing execution means for printing out said externally inputted printing data to a recording medium; data detection means for detecting security data from said externally inputting printing data; and operation control means for controlling the printout operation of said printing execution means in given condition when said data detection means detects security data; and
a member having said printing head installed thereon.

13. A printing apparatus according to claim 12, further comprising releasing data detection means for detecting releasing data from said externally inputted printing data, wherein said operation control means does not control the operation of said printing execution means when said releasing detection means detects releasing data.

14. A printing apparatus according to claim 12 or claim 13, wherein data deciphering means is provided for deciphering by use of predetermined deciphering data the externally inputted printing data enciphered by predetermined cipher data, and said data detection means detects security data from the printing data deciphered by said data deciphering means, and said printing execution means prints out the printing data deciphered by said data deciphering means.

15. A printing system comprising:
a data processing apparatus; and
a printing apparatus for printing out the printing data output externally from said data processing apparatus to a recording medium, wherein
said printing apparatus is provided with a printing head having printing execution means for printing out said externally inputted printing data to a recording medium; data detection means for detecting security data form said externally inputted printing data; and operation control means for controlling the printout operation of said printing execution means in given condition when said data detection means detects security data; and
a member having said printing head installed thereon.

16. A data processing apparatus for transmitting printing data to a printing apparatus according to Claim 14 comprising:
cipher memory means for storing the cipher data externally inputted for said printing apparatus; and
data enciphering means for enciphering the printing data externally output to said printing apparatus using the cipher data stored on said cipher memory mean.

17. A data processing method by means of a printing head used for a printing apparatus for printing out the printing data externally inputted from a data processing apparatus to a recording medium, comprising the following steps of:
detecting security data from said externally inputted printing data; and
controlling the printout operation of the printing data in a given condition when security data is detected.

18. A data processing method according to Claim 17, further comprising the step of discriminating data for discriminating the set content of security data detected in said step of detecting data, wherein the printout operation is controlled in said step of operation control in a given condition corresponding to the set content discriminated in said step of data discrimination.

19. A printing head used for a printing apparatus for printing out to the printing data externally inputted from a data processing apparatus to a recording medium, comprising:
data deciphering means for deciphering by use of predetermined deciphering data the printing data externally inputted and enciphered by use of predetermined cipher data; and
printing execution means for printing out the printing data deciphered by said deciphering means to a recording medium.

20. A printing head according to Claim 19, wherein said cipher data and said deciphering data are different.

21. A printing head according to Claim 19, further comprising:
cipher output means for outputting said cipher data externally to said data processing apparatus.

22. A printing head according to Claim 19, further comprising deciphering memory means for storing the externally inputted deciphered data, wherein
said data deciphering means deciphers by use of deciphering data the printing data stored on said deciphering memory means.

23. A printing head according to Claim 19, wherein said printing execution means is the integrated circuit having at least a part thereof formed on the circuit base plate, and said data deciphering means is the integrated circuit formed on said circuit base plate.

24. A printing head according to Claim 19, wherein ink is discharged to a recording medium for printing out.

25. A printing head according to Claim 19, wherein ink is discharged by utilization of thermal energy.

26. A printing head according to Claim 19, wherein ink is discharge use of piezo-elements.

27. A printing head according to Claim 19, wherein said printing head is a thermal head.

28. A printing apparatus for printing out the printing data externally inputted from a data processing apparatus to a recording medium, comprising:
a printing head provided with data deciphering means for deciphering by use of predetermined deciphering data the printing data externally inputted and enciphered by use of predetermined cipher data; and printing execution means for printing out the printing data deciphered by said data deciphering means to a recording medium, and
a member for installing said printing head thereon.

29. A printing system comprising:
a data processing apparatus; and
a printing apparatus for printing out the printing data externally output by said data processing apparatus to a recording medium, wherein
said printing apparatus is provided with a printing head having data deciphering means for deciphering by use of predetermined deciphering data the printing data externally inputted and enciphered by use of predetermined cipher data, and printing execution means for printing out said deciphered printing data by said data deciphering means to a recording medium; and
a member for installing said printer head.

30. A data processing apparatus for transmitting printing data to a printing apparatus according to Claim 28, comprising:
cipher memory means for storing the cipher data externally inputted from said printing apparatus; and
data enciphering means for enciphering the printing data externally output to said printing apparatus by use of the cipher data stored on said cipher memory means.

31. A data processing method of a printing head used for a printing apparatus for printing out the printing data externally inputted from a data processing apparatus to a recording medium, comprising the following steps of:
deciphering by use of predetermined deciphering data the printing data externally inputted and enciphered by use of predetermined cipher data; and
executing the printout of the printing data deciphered in said step of data deciphering to a recording medium.
